(19) Europäisches Patentamt / European Patent Office / Office européen des brevets

(11) **EP 2 247 637 B1**

(12) **EUROPÄISCHE PATENTSCHRIFT**

(45) Veröffentlichungstag und Bekanntmachung des Hinweises auf die Patenterteilung:
**16.10.2013 Patentblatt 2013/42**

(21) Anmeldenummer: **09712285.7**

(22) Anmeldetag: **19.02.2009**

(51) Int Cl.:
*C08G 18/32* (2006.01)          *C08G 18/66* (2006.01)
*C08G 18/73* (2006.01)

(86) Internationale Anmeldenummer:
**PCT/EP2009/051983**

(87) Internationale Veröffentlichungsnummer:
**WO 2009/103767 (27.08.2009 Gazette 2009/35)**

(54) **THERMOPLASTISCHES POLYURETHAN MIT VERMINDERTER BELAGSBILDUNG**

THERMOPLASTIC POLYURETHANE WITH REDUCED COATING FORMATION

POLYURÉTHANE THERMOPLASTIQUE À FORMATION DE DÉPÔT RÉDUITE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.02.2008 EP 08151786**

(43) Veröffentlichungstag der Anmeldung:
**10.11.2010 Patentblatt 2010/45**

(73) Patentinhaber: **BASF SE**
**67056 Ludwigshafen (DE)**

(72) Erfinder:
• **HENZE, Oliver Steffen**
**49401 Damme (DE)**

• **FRIEDERICHS, Stephan**
**49088 Osnabrück (DE)**
• **KRECH, Rüdiger**
**49356 Diepholz (DE)**
• **HACKMANN, Katja**
**49393 Lohne (DE)**
• **HANSEN, Marc**
**27249 Mellinghausen (DE)**

(56) Entgegenhaltungen:
EP-A- 1 010 712      EP-A- 1 149 851
EP-A- 1 674 494      EP-A- 1 854 818

EP 2 247 637 B1

**Beschreibung**

Die Erfindung betrifft thermoplastische Polyurethane mit verminderter Belagsbildung, Verfahren zu ihrer Herstellung, ihre Verwendung zur Herstellung von Formkörpern wie auch die Verwendung spezieller Gemische von Alkandiolen als Kettenverlängerer.

Aromatische, thermoplastische Polyurethane (aromatische TPU) sind nicht lichtstabil aufgrund ihres Aufbaus aus aromatischen Diisocyanaten. Die entsprechenden Polyurethane neigen zu starken Vergilbungen.

Daher wurden aliphatische, thermoplastische Polyurethane (TPU) entwickelt, die eine verbesserte Vergilbungsbeständigkeit haben und auch wärmestabilisiert sind.

Die EP-A-1 010 712 betrifft aliphatische, thermoplastische Polyurethane, die erhältlich sind aus Hexamethylendiisocyanat (HDI) als Diisocyanat-Komponente, Polyesterpolyolen, Kettenverlängerern und UV-Stabilisatoren. Als Kettenverlängerer werden 1,6-Hexandiol oder Gemische aus 80 bis 100 Gew.-% 1,6-Hexandiol und 0 bis 20 Gew.-% Kettenverlängerern mit einem mittleren Molekulargewicht von 60 bis 500 g/mol eingesetzt.

Die EP-A-1 153 951 betrifft Formkörper aus thermoplastischen Polyurethanen mit reduziertem Fogging. Die Polyurethane sind aus einem organischen Diisocyanat, Polyesterpolyolen und Diol- und/oder Diamin-Kettenverlängerern aufgebaut. Als Kettenverlängerungsmittel werden aliphatische Diole oder Diamine mit einem Molekulargewicht von 60 bis 500 eingesetzt. Besonders bevorzugt wird 1,6-Hexandiol eingesetzt, das gegebenenfalls in Abmischung mit bis zu 20 Gew.-% an Kettenverlängerern mit einem mittleren Molekulargewicht von 60 bis 500 g/mol verwendet werden kann.

Die EP- A- 1 043 349 betrifft thermoplastisch verarbeitbare Polyurethan- Formmassen, die frei von migrationsfähigen Nebenprodukten sein sollen und eine hohe Lichtechtheit aufweisen sollen. Als Kettenverlängerungsmittel werden 1, 5- Pentandiol, 1, 6- Hexandiol oder 1, 4- Cyclohexandiol eingesetzt.

Die DE-A-10 20 06 021 734 betrifft aliphatische, sinterfähige, thermoplastische Polyurethan-Formmassen mit verbessertem Ausblühverhalten. Die Formmassen enthalten ein Gemisch von Kettenverlängerern, wobei ein Kettenverlängerer durch Umsetzung von Carbonsäuren oder Dicarbonsäuren mit Alkoholen erhalten wird und ein Molekulargewicht von 104 bis 500 g/mol aufweist.

Aliphatische, thermoplastische Polyurethane, die auf Hexamethylendiisocyanat basieren, haben eine relativ hohe Ausblühneigung niedermolekularer Bestandteile, was die Verwendung in vielen Bereichen behindert. Die Ausblühneigung kann durch Verwendung geeigneter Kettenverlängerer verringert werden, jedoch sind die bekannten Kettenverlängerer, wie sie vorstehend beschrieben sind, nicht für alle Anwendungsbereiche ausreichend. Wegen der guten mechanischen und thermischen Eigenschaften werden auf HDI basierende thermoplastische Polyurethane vor allem im Automobilinnenraum und in Bereichen mit hoher Sonneneinstrahlung eingesetzt. In diesen Bereichen kommen die guten mechanischen Eigenschaften und die vergleichsweise hohen Erweichungspunkte zur Geltung. Für diese Anwendungen ist jedoch wichtig, die Ausblühneigung bzw. die Belagsbildung auf aus thermoplastischen Polyurethanen hergestellten Formkörpern zu verringern.

Aufgabe der vorliegenden Erfindung ist die Bereitstellung von thermoplastischen Polyurethanen, die die Nachteile der bekannten thermoplastischen Polyurethane vermeiden und eine verringerte Belagsbildung bzw. verringerte Ausblühneigung zeigen.

Die Aufgabe wird erfindungsgemäß gelöst durch ein thermoplastisches Polyurethan, erhältlich durch Umsetzung der folgenden Komponenten A, B, C und gegebenenfalls D und E

(a) mindestens einem aliphatischen, organischen Diisocyanat als Komponente A,
(b) mindestens einer gegenüber Komponente A reaktiven Verbindung mit einem Gewichtsmittel des Molekulargewichts von 500 bis 10000 g/mol, als Komponente B,
(c) einem Gemisch aus Alkandiolen als Kettenverlängerem, enthaltend 60 bis 85 mol-% 1,6-Hexandiol als Hauptkettenverlängerer C1 und 15 bis 40 mol-% 1,3-Propandiol als Cokettenverlängerer C2, als Komponente C,
(d) mindestens einem Katalysator als Komponente D,

üblichen Zusatzstoffen als Komponente E.

Es wurde erfindungsgemäß gefunden, dass spezielle Gemische aus 1,6-Hexandiol und 1,3-Propandiol als Kettenverlängerer die Ausblühneigung von thermoplastischen Polyurethanen auf Basis von aliphatischen, organischen Diisocyanaten deutlich vermindern können und damit eine Belagsbildung zuverlässig verhindern können.

Die erfindungsgemäßen Gemische aus Alkandiolen enthalten 60 bis 85 mol-%, vorzugsweise 65 bis 80 mol-%, insbesondere 70 bis 78 mol-%, 1,6-Hexandiol als Hauptkettenverlängerer C1 und 15 bis 40 mol-%, vorzugsweise 20 bis 35 mol-%, insbesondere 22 bis 30 mol-% als Cokettenverlängerer.

Die spezifische Kombination dieser Alkandiole erlaubt es, das Ausblühen niedermolekularer Bestandteile weitestgehend zu verhindern.

Die Herstellung der Alkandiole ist dem Fachmann bekannt, und sie sind handelsüblich.

Bei Anwendungen mit geringeren Anforderungen an die Lichtstabilität können Teile der aliphatischen Diole der Kettenverlängerungsmittel, beispielsweise bis zu 50 Gew.-%, durch aromatische Diole ersetzt werden. Bevorzugt besteht der Kettenverlängerer aus 1,6-Hexandiol und 1,3-Propandiol als Diolen. Weiterhin können in geringen Mengen auch übliche monofunktionelle Verbindungen eingesetzt werden, beispielsweise als Kettenabbrecher oder Entformungshilfen. Beispielhaft seien Alkohole wie Octanol und Stearylalkohol genannt.

Die Kettenverlängerer werden zusammen mit mindestens einem aliphatischen, organischen Diisocyanat als Komponente A, mindestens einer gegenüber Komponente A reaktiven Verbindung mit einem Gewichtsmittel des Molekulargewichts von 500 bis 10000 g/mol als Komponente B und gegebenenfalls Katalysatoren und üblichen Zusatzstoffen als Komponenten D und E eingesetzt.

Die Kettenverlängerer der Komponente C werden, bezogen auf das Polyol, vorzugsweise in einer Menge von 5 bis 130 Gew.-% eingesetzt.

Bei Mitverwendung eines Katalysators als Komponente D wird dieser bevorzugt in einer Menge von 1 bis 1000 ppm, bezogen auf das thermoplastische Polyurethan, eingesetzt.

Übliche Zusatzstoffe der Komponente E werden vorzugsweise in Mengen von 0 bis 50 Gew.-%, besonders bevorzugt 0 bis 40 Gew.-%, bezogen auf das gesamte thermoplastische Polyurethan, eingesetzt.

Als Komponente A wird mindestens ein aliphatisches, organisches Diisocyanat eingesetzt. Beispiele sind Ethylendiisocyanat, 1, 4- Tetramethylendiisocyanat, 1, 6- Hexamethylendiisocyanat, 1, 12- Dodecandiisocyanat und Gemische davon. Davon besonders bevorzugt wird als Komponente A Hexamethylendiisocyanat oder ein Gemisch aus mindestens 80 Gew.- % Hexamethylendiisocyanat und bis zu 20 Gew.- % weiteren aliphatischen, organischen Diisocyanaten eingesetzt.

Unter aliphatischen Diisocyanaten werden auch cycloaliphatische Diisocyanate verstanden, wie Isophorondiisocyanat, 1, 4- Cyclohexandiisocyanat, 1- Methyl- 2, 4- cyclohexandiisocyanat, 1- Methyl- 2, 6- cyclohexandiisocyanat sowie deren Isomerengemische, 4, 4'- Dicyclohexylmethandiisocyanat, 2, 4'- Dicyclohexylmethandiisocyanat und 2, 2'- Dicyclohexylmethandiisocyanat sowie die entsprechenden Isomerengemische.

Je nach Anforderungen an die aus den TPU herzustellenden Formkörper kann das Hexamethylendiisocyanat (HDI) bis zu 25 Gew.- % gegen ein oder mehrere andere aliphatische Diisocyanate ausgetauscht werden, beispielsweise Isophorondiisocyanat, 1, 4- Cyclohexandiisocyanat, 1- Methyl- 2, 4- Cyclohexandiisocyanat, 1- Methyl- 2, 6- cyclohexandiisocyanat und Isomerengemische davon, 4, 4'-, 2, 4'- und 2, 2'- Dicyclohexylmethandiisocyanat und Isomerengemische davon.

Bei Anwendungen mit geringeren Anforderungen an die Lichtstabilität können bis zu 20 Gew.- % des aliphatischen Diisocyanats auch durch aromatische Diisocyanate ersetzt werden, beispielsweise 2, 4- Tolylendiisocyanat, 2, 6- Tolylendiisocyanat, 4, 4'-, 2, 2'- oder 2, 4'- Diphenylmethandiisocyanat.

Als Komponente B werden bevorzugt Polyole, insbesondere Polyesterdiole, eingesetzt.

Als Komponente B können beispielsweise Polyesterpolyole, Polyetherpolyole, Polycarbonatdiole, Gemische aus Polyetherpolyolen und Polyesterpolyolen, Gemische aus Polyetherpolyolen und Polycarbonatdiolen oder Gemische aus Polyesterpolyolen und Polycarbonatdiolen eingesetzt werden. Komponente B weist dabei vorzugsweise ein Gewichtsmittel des Molekulargewichts von 600 bis 5000 g/mol, besonders bevorzugt von 700 bis 4200 g/mol auf. Bevorzugt handelt es sich um lineare Hydroxyl-terminierte Polyole, die produktionsbedingt kleine Mengen an nicht-linearen Verbindungen enthalten können.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z. B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1, 4- Butandiol, 1, 5- Pentandiol, 1, 6- Hexandiol, 1, 10- Decandiol, 2, 2- Dimethyl- 1, 3- propandiol, 1, 3- Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1, 4- Butandiol oder 1, 6- Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol- polyadipate, 1, 4- Butandiol- polyadipate, Ethandiol- 1, 4- butandiol- polyadipate, 1, 6- Hexandiol- neopentylglykol- polyadipate, 1, 6- Hexandiol- 1, 4- butandiol- polyadipate und Polycaprolactone. Die Polyesterdiole besitzen mittlere Molekulargewichte von 600 bis 5000, bevorzugt von 700 bis 4200 und können einzeln oder in Form von Mischungen untereinander zur Anwendung kommen.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z. B. genannt: Ethylenoxid, 1, 2- Propylenoxid, Epichlorhydrin und 1, 2- Butylenoxid und 2, 3- Butylenoxid. Vorzugsweise werden Ethylenoxid, Propylenoxid und Mischungen aus 1, 2- Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N- Alkyldiethanolamine, beispielsweise N- Methyl- diethanol- amin, und Diole, wie Ethylenglykol, 1, 3- Propylenglykol, 1, 4- Butandiol und 1, 6- Hexandiol.

Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im Wesentlichen linearen Polyetherdiole besitzen Molekulargewichte von 600 bis 5000, bevorzugt von 700 bis 4200. Sie können sowohl einzeln als auch in Form von Mischungen untereinander zur Anwendung kommen.

Besonders bevorzugt sind hydroxylgruppenhaltige Polymerisationsprodukte des Tetrahydrofurans und Polyetherdiole auf Basis Ethylenoxid und/oder Propylenoxid. Auch nur der teilweise Einsatz dieser bevorzugten Polyetherdiole in Polyolgemischen, insbesondere mit 1,6-Hexandiol als Kettenverlängerungsmittel, führt zu TPUs, die nach beschleunigten Alterungstests (z. B. nach Lagerung bei 60 bis 95°C) nur sehr geringe Belagsbildung auf der Oberfläche zeigen.

Bevorzugt beträgt das Äquivalentverhältnis von Diisocyanat A zu reaktiver Verbindung B von 1,5:1,0 bis 10,0: 1,0. Bevorzugt beträgt die NCO-Kennzahl (gebildet aus dem mit 100 multiplizierten Quotienten der Äquivalentverhältnisse von Isocyanat-Gruppen und der Summe der Hydroxyl-Gruppen aus Polyol der Komponente B und Kettenverlängerungsmittel) 95 bis 105.

Die erfindungsgemäßen thermoplastischen Polyurethane können in Gegenwart mindestens eines Katalysators als Komponente D hergestellt werden.

Geeignete Katalysatoren sind nach dem Stand der Technik bekannte und übliche tertiäre Amine, wie z. B. Triethylamin, Dimethylcyclohexylamin, N- Methylmorpholin, N, N'- Dimethyl- piperazin, 2- (Dimethylaminoethoxy)- ethanol, Diazabicyclo- [2, 2, 2]- octan und ähnliche sowie insbesondere organische Metallverbindungen wie Titansäureester, Eisenverbindungen, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Ferner können als Komponente E übliche Zusatzstoffe eingesetzt werden. Geeignete UV- Stabilisatoren sind beispielsweise in R. Gächter, H. Müller (Herausgeber), Taschenbuch der Kunststoff- Additive, 3. Ausgabe, Hanser Verlag, München, 1989, Kapitel "Polyurethane", beschrieben. Als UV- Stabilisatoren werden vorzugsweise Gemische von gehinderten Amin- Stabilisatoren (HALS) und Hydroxyphenylbenzotriazolen eingesetzt, beispielsweise in einem Gewichtsverhältnis von 2: 1 bis 1: 2.

Neben den TPU-Komponenten, UV-Stabilisatoren und gegebenenfalls Katalysatoren können auch Hilfsmittel und Zusatzstoffe zugesetzt werden. Genannt seien beispielsweise Gleitmittel, wie Fettsäureester, deren Metallseifen, Fettsäure-Amide und Silikonverbindungen, Antiblockmittel, Inhibitoren, Stabilisatoren gegen Hydrolyse, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J. H. Saunders, K. C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Die Gleitmittel werden vorzugsweise in Mengen von 0,1 bis 1,0 Gew.-% bezogen auf A) + B) + C) zugesetzt. Die Antioxidationsmittel finden vorzugsweise in Mengen von 0,1 bis 0,7 Gew.-% bezogen auf A) und B) und C) Anwendung.

Gemäß einer Ausführungsform der Erfindung weist das erfindungsgemäße thermoplastische Polyurethan einen Hartphasenanteil von > 0,40 auf, wobei der Hartphasenanteil durch folgende Formel definiert ist:

$$\text{Hartphasenanteil} = \left\{ \sum_{x=1}^{k} \left[ \left( m_{KVx} / M_{KVx} \right) * M_{Iso} + m_{KVx} \right] \right\} / m_{ges}$$

mit den folgenden Bedeutungen:

$M_{KVx}$: Molare Masse der Kettenverlängerers x in g/mol

$m_{KVx}$: Masse des Kettenverlängerers x in g

$M_{Iso}$: Molare Masse des verwendeten Isocyanates in g/mol

$m_{ges}$: Gesamtmasse aller Ausgangsstoffe in g

k: Anzahl der Kettenverlängerer.

Die erfindungsgemäßen thermoplastischen Polyurethane werden hergestellt, indem man die angegebenen Komponenten A, B, C und gegebenenfalls D und E unter Vermischen miteinander umsetzt.

Die Herstellung kann dabei kontinuierlich oder diskontinuierlich erfolgen.

Bei einer kontinuierlichen Herstellung werden vorzugsweise die Komponenten B und C kontinuierlich gemischt und danach mit dem Diisocyanat der Komponente A intensiv vermischt (One- Shot- Verfahren) . Anschließend kann die Reaktion in einem Austragsgefäß, beispielsweise einem Extruder, zu Ende geführt werden. Das erhaltene Produkt kann gegebenenfalls granuliert werden. Für geeignete Herstellungsverfahren kann auf EP- A- 1 010 712, Absätze [0031] bis [0040] verwiesen werden.

Das erfindungsgemäße TPU wird bevorzugt kontinuierlich hergestellt, wobei insbesondere das Polyol und der Kettenverlängerer kontinuierlich gemischt werden, beispielsweise durch Statik-Mischer, und dieses Gemisch mit dem Diisocyanat, vorzugsweise HDI, gemischt wird, beispielsweise in einem Statik-Mischer, und zur Reaktion gebracht wird.

Die Zugabe von Additiven kann nach der Polymerisation durch Compoundierung oder auch während der Polymerisation erfolgen. Während der Polymerisation können beispielsweise Antioxidationsmittel und UV-Stabilisatoren im Polyol gelöst werden. Es können aber auch beispielsweise Gleitmittel und Stabilisatoren bei Verwendung eines Extruders im zweiten Teil der Schnecke zugegeben werden.

Die erfindungsgemäßen thermoplastischen Polyurethane werden insbesondere zur Herstellung von Formkörpern durch Spritzguß-, Extrusions- oder Sinterverfahren oder zur Beschichtung von Formkörpern eingesetzt. Sie können damit beispielsweise zur Herstellung von Folien oder von Spritzgießteilen eingesetzt werden. Besonders bevorzugt erfolgt der Einsatz der Formkörper im Automobil(innen)bereich sowie im Maschinenbau-, Möbel-, Sport- und Freizeitbereich. Dabei sind die Formkörper bevorzugt Ausbauteile im Automobilinnenbereich, wie Armaturenbretter, Türenverkleidungen oder Lenkradumhüllungen.

Die Erfindung betrifft auch die Verwendung eines Gemisches aus Alkandiolen, enthaltend 60 bis 85 mol-% 1,6-Hexandiol als Hauptkettenverlängerer C1 und 15 bis 40 mol-% 1,3-Propandiol als Cokettenverlängerer C2, als Kettenverlängerer bei der Herstellung von thermoplastischen Polyurethanen zur Verhinderung der Belagsbildung auf aus den thermoplastischen Polyurethanen hergestellten Formkörpern. Dabei sind die Alkandiole bevorzugt wie vorstehend definiert. Die thermoplastischen Polyurethane sind dabei ebenfalls vorzugsweise wie vorstehend beschrieben erhältlich.

Die Erfindung wird durch die nachstehenden Beispiele näher erläutert.

Beispiele

Beschreibung der Lagertests:

Lagertest 1: Die für 20h bei 100°C getemperten Proben werden im Normklima (23°C, 50% relative Luftfeuchtigkeit) gelagert.

Lagertest 2: Die ungetemperten Proben werden im Normklima (23°C, 50% relative Luftfeuchtigkeit) gelagert.

Lagertest 3: Die getemperten Proben werden bei 80°C im Heizschrank gelagert.

Lagertest 4: Die ungetemperten Proben werden bei 80°C im Heizschrank gelagert.

Lagertest 5: Die getemperten Proben werden bei 48°C und einer relativen Luftfeuchtigkeit von 100% im Heizschrank gelagert.

Lagertest 6: Die ungetemperten Proben werden bei 48°C und einer relativen Luftfeuchtigkeit von 100% im Heizschrank gelagert.

Beispiel 1:

MFR

TPU Proben mit einem Hartphasenanteil von 0,60 basiert auf HDI, einem Polyesterdiol mit einem Molekulargewicht von 2000, 1-6 Hexandiol als Hauptkettenverlängerer und 1,3-Propandiol als Nebenkettenverlängerer wurden mit verschiedenen Stoffmengenanteilen des Hauptkettenverlängerers (c1) an der Gesamtstoffmenge n der eingesetzten Kettenverlängerer im Handgussverfahren hergestellt und zu Spritzplatten (120x95x2mm) verarbeitet. Die Platten wurden unter verschiedenen Bedingungen gelagert (Lagertest 1-6, verschiedene Zeiten).

| Probe | | 1V | 2V | 3 | 4 | 5V | 6V |
|---|---|---|---|---|---|---|---|
| Hartsegment | | 0,60 | 0,60 | 0,60 | 0,60 | 0,60 | 0,60 |
| Polyesterol (Mw 2000) | | X | X | X | X | X | X |
| I-6 Hexandiol | mol-% | 100 | 90 | 75 | 65 | 50 | 0 |
| I-3 Propandiol | mol-% | 0 | 10 | 25 | 35 | 50 | 100 |
| HDI | | X | X | X | X | X | X |
| Lagertest 1 | 42 d | ohne Belag | ohne Belag | ohne Belag | ohne Belag | ohne Belag | ohne Belag |
| Lagertest 2 | 42 d | ohne Belag | ohne Belag | ohne Belag | ohne Belag | ohne Belag | ohne Belag |
| Lagertest 3 | 42 d | Belag | Belag | ohne Belag | ohne Belag | ohne Belag | Belag |
| Lagertest 4 | 42 d | Belag | Belag | ohne Belag | ohne Belag | ohne Belag | Belag |
| Lagertest 5 | 120h | Belag | Belag | ohne Belag | ohne Belag | Belag | Belag |
| Lagertest 6 | 120h | Belag | Belag | ohne Belag | ohne Belag | Belag | Belag |
| Lagertest 5 | 250h | Belag | Belag | ohne Belag | Belag | Belag | Belag |
| Lagertest 6 | 250h | Belag | Belag | ohne Belag | Belag | Belag | Belag |
| Lagertest 5 | 420h | Belag | Belag | ohne Belag | Belag | Belag | Belag |
| Lagertest 6 | 420h | Belag | Belag | ohne Belag | Belag | Belag | Belag |

Die erfindungsgemäßen TPU Proben 3 und 4 sind besonders vorteilhaft im Vergleich zu den Vergleichsmassen mit nicht erfindungsgemäßen Mengenverhältnissen der Kettenverlängerer.

Beispiel 2

TPU Proben mit einem Hartphasenanteil von 0,70 basiert auf HDI, einem Polyesterdiol mit einem Molekulargewicht von 2000, 1-6 Hexandiol als Hauptkettenverlängerer und 1-3 Propandiol als Nebenkettenverlängerer wurden mit verschiedenen Stoffmengenanteilen des Hauptkettenverlängerers (c1) an der Gesamtstoffmenge n der eingesetzten Kettenverlängerer im Handgussverfahren hergestellt und zu Spritzplatten (120x95x2mm) verarbeitet. Die Platten wurden unter verschiedenen Bedingungen gelagert (Lagertest 1-6, verschiedene Zeiten).

| Probe | | 7V | 8 | 9 | 10V |
|---|---|---|---|---|---|
| Hartsegment | | 0,70 | 0,70 | 0,70 | 0,70 |
| Polyesterol (Mw 2000) | | X | X | X | X |
| 1-6 Hexandiol | mol-% | 100 | 75 | 65 | 100 |
| 1-3 Propandiol | mol-% | 0 | 25 | 35 | 0 |
| HDI | | X | X | X | X |

(fortgesetzt)

| Probe | | 7V | 8 | 9 | 10V |
|---|---|---|---|---|---|
| Lagertest 1 | 42 d | ohne Belag | ohne Belag | ohne Belag | ohne Belag |
| Lagertest 2 | 43 d | Belag | ohne Belag | ohne Belag | Belag |
| Lagertest 3 | 42 d | Belag | ohne Belag | ohne Belag | Belag |
| Lagertest 4 | 42 d | Belag | ohne Belag | ohne Belag | Belag |
| Lagertest 5 | 120h | Belag | ohne Belag | ohne Belag | Belag |
| Lagertest 6 | 120h | Belag | ohne Belag | Belag | Belag |
| Lagertest 5 | 250h | Belag | ohne Belag | Belag | Belag |
| Lagertest 6 | 250h | Belag | Belag | Belag | Belag |
| Lagertest 5 | 420h | Belag | Belag | Belag | Belag |
| Lagertest 6 | 420h | Belag | Belag | Belag | Belag |

Die erfindungsgemäßen Proben 8 und 9 sind besonders vorteilhaft im Vergleich zu den Vergleichsmassen mit nicht erfindungsgemäßen Mengenverhältnissen der Kettenverlängerer.

Beispiel 3

TPU Proben mit einem Hartphasenanteil von 0,80 basiert auf HDI, einem Polyesterdiol mit einem Molekulargewicht von 2000,1-6 Hexandiol als Hauptkettenverlängerer und 1-3 Propandiol als Nebenkettenverlängerer wurden mit verschiedenen Stoffmengenanteilen des Hauptkettenverlängerers (c1) an der Gesamtstoffmenge n der eingesetzten Kettenverlängerer im Handgussverfahren hergestellt und zu Spritzplatten (120x95x2mm) verarbeitet. Die Platten wurden unter verschiedenen Bedingungen gelagert (Lagertest 1, 3-6, verschiedene Zeiten).

| Probe | | 11V | 12 |
|---|---|---|---|
| Hartsegment | | 0,80 | 0,80 |
| Polyesterol (Mw 2000) | | X | X |
| 1-6 Hexandiol | mol-% | 100 | 75 |
| 1-3 Propandiol | mol-% | 0 | 25 |
| HDI | | X | X |
| Lagertest 1 | 42 d | ohne Belag | ohne Belag |
| Lagertest 3 | 42 d | Belag | ohne Belag |
| Lagertest 4 | 42 d | Belag | ohne Belag |
| Lagertest 5 | 120h | Belag | ohne Belag |
| Lagertest 6 | 120h | Belag | Belag |

Die erfindungsgemäße Probe 12 ist besonderes vorteilhaft im Vergleich zur Vergleichsmasse, die nur Hexandiol als Kettenverlängerer enthält.

**Patentansprüche**

1.  Thermoplastisches Polyurethan, erhältlich durch Umsetzung der folgenden Komponenten A, B, C und gegebenenfalls D und E

    (e) mindestens einem aliphatischen, organischen Diisocyanat als Komponente A,
    (f) mindestens einer gegenüber Komponente A reaktiven Verbindung mit einem Gewichtsmittel des Molekulargewichts von 500 bis 10000 g/mol, als Komponente B,

(g) einem Gemisch aus Alkandiolen als Kettenverlängerem, enthaltend 60 bis 85 mol-% 1,6-Hexandiol als Hauptkettenverlängerer C1 und 15 bis 40 mol-% 1,3-Propandiol als Cokettenverlängerer C2, als Komponente C,

(h) mindestens einem Katalysator als Komponente D,

(i) üblichen Zusatzstoffen als Komponente E.

2. Thermoplastisches Polyurethan nach Anspruch 1, **dadurch gekennzeichnet, dass** die Komponente C 65 bis 80 mol-% der Komponente C1 und 20 bis 35 mol-% der Komponente C2 enthält.

3. Thermoplastisches Polyurethan nach Anspruch 2, **dadurch gekennzeichnet, dass** die Komponente C 70 bis 78 mol-% der Komponente C1 und 22 bis 30 mol-% der Komponente C2 enthält.

4. Thermoplastisches Polyurethan nach einem der Ansprüche 1 bis 3, **dadurch gekennzeichnet, dass** als Komponente A Hexamethylendiisocyanat oder Gemische aus mindestens 80 Gew.-% Hexamethylendiisocyanat und bis zu 20 Gew.-% weiteren aliphatischen, organischen Diisocyanaten eingesetzt werden.

5. Thermoplastisches Polyurethan nach einem der Ansprüche 1 bis 4, **dadurch gekennzeichnet, dass** als Komponente B Polyesterdiole eingesetzt werden.

6. Verfahren zur Herstellung eines thermoplastischen Polyurethans nach einem der Ansprüche 1 bis 5, **dadurch gekennzeichnet, dass** man die angegebenen Komponenten A, B, C und gegebenenfalls D und E unter Vermischen miteinander umsetzt.

7. Verwendung der thermoplastischen Polyurethane nach einem der Ansprüche 1 bis 6 zur Herstellung von Formkörpern durch Spritzguß-, Extrusions- oder Sinterverfahren oder zur Beschichtung von Formkörpem.

8. Verwendung nach Anspruch 7, **dadurch gekennzeichnet, dass** die Formkörper für Anwendungen im Automobil-, Maschinenbau-, Möbel-, Sport- und Freizeitbereich eingesetzt werden.

9. Formkörper, enthaltend ein thermoplastisches Polyurethan, wie es in einem der Ansprüche 1 bis 6 definiert ist.

10. Verwendung eines Gemisches aus Alkandiolen, enthaltend 60 bis 85 mol-% 1,6-Hexandiol als Hauptkettenverlängerer C1 und 15 bis 40 mol-% 1,3-Propandiol als Cokettenverlängerer C2, als Kettenverlängerer bei der Herstellung von thermoplastischen Polyurethanen zur Verhinderung der Belagsbildung auf aus den thermoplastischen Polyurethanen hergestellten Formkörpern.

## Claims

1. A thermoplastic polyurethane, obtainable via reaction of the following components A, B, C, andoptionally D and E

(a) at least one aliphatic, organic diisocyanate, as component A,

(b) at least one compound which is reactive toward component A and which has a weight-average molar mass of from 500 to 10 000 g/mol, as component B,

(c) a mixture composed of alkanediols as chain extenders, comprising from 60 to 85 mol% of 1,6-hexanediol as main chain extender C1 and from 15 to 40 mol% of 1,3-propanediol as co-chain extender C2, as component C,

(d) at least one catalyst, as component D,

(e) conventional additives as component E.

2. The thermoplastic polyurethane according to claim 1, wherein component C comprises from 65 to 80 mol% of component C1 and from 20 to 35 mol% of component C2.

3. The thermoplastic polyurethane according to claim 2, wherein component C comprises from 70 to 78 mol% of component C1 and from 22 to 30 mol% of component C2.

4. The thermoplastic polyurethane according to any one of claims 1 to 3, wherein the component A used comprises hexamethylene diisocyanate or a mixture composed of at least 80% by weight of hexamethylene diisocyanate and up to 20% by weight of other aliphatic, organic diisocyanates.

**5.** The thermoplastic polyurethane according to any of claims 1 to 4, wherein the component B used comprises polyesterdiols.

**6.** A process for the production of a thermoplastic polyurethane according to any of claims 1 to 5, which comprises reacting the stated components A, B, C, and optionally D and E with one another, with mixing.

**7.** The use of the thermoplastic polyurethanes according to any of claims 1 to 6 for the production of moldings via injection molding, extrusion, or sintering processes, or for the coating of moldings.

**8.** The use according to claim 7, wherein the moldings are used for applications in the automobile sector, mechanical engineering sector, furniture sector, sports sector, and leisure sector.

**9.** A molding, comprising a thermoplastic polyurethane as defined in any of claims 1 to 6.

**10.** The use of a mixture composed of alkanediols, comprising from 60 to 85 mol% of 1,6-hexanediol as main chain extender C1 and from 15 to 40 mol% of 1,3-propanediol as co-chain extender C2, as chain extender in the production of thermoplastic polyurethanes for inhibiting formation of deposit on moldings produced from the thermoplastic polyurethanes.

**Revendications**

**1.** Polyuréthane thermoplastique, pouvant être obtenu par transformation des composants suivants A, B, C et le cas échéant D et E

(a) au moins un diisocyanate organique, aliphatique comme composant A,
(b) au moins un composé réactif par rapport au composant A, présentant une moyenne pondérale du poids moléculaire de 500 à 10 000 g/mole, comme composant B,
(c) un mélange d'alcanediols comme agents d'allongement de chaîne, contenant 60 à 85% en mole de 1,6-hexanediol comme agent d'allongement de chaîne principal C1 et 15 à 40% en mole de 1,3-propanediol comme co-agent d'allongement de chaîne C2, comme composant C,
(d) au moins un catalyseur comme composant D,
(e) des additifs usuels comme composant E.

**2.** Polyuréthane thermoplastique selon la revendication 1, **caractérisé en ce que** le composant C contient 65 à 80% en mole du composant C1 et 20 à 35% en mole du composant C2.

**3.** Polyuréthane thermoplastique selon la revendication 2, **caractérisé en ce que** le composant C contient 70 à 78% en mole du composant C1 et 22 à 30% en mole du composant C2.

**4.** Polyuréthane thermoplastique selon l'une quelconque des revendications 1 à 3, **caractérisé en ce qu'**on utilise, comme composant A, de l'hexaméthylènediisocyanate ou des mélanges d'au moins 80% en poids d'hexaméthylènediisocyanate et de jusqu'à 20% en poids d'autres diisocyanates organiques, aliphatiques.

**5.** Polyuréthane thermoplastique selon l'une quelconque des revendications 1 à 4, **caractérisé en ce qu'**on utilise, comme composant B, des polyesterdiols.

**6.** Procédé pour la préparation d'un polyuréthane thermoplastique selon l'une quelconque des revendications 1 à 5, **caractérisé en ce qu'**on transforme les composants indiqués A, B, C et le cas échéant D et E en les mélangeant les uns avec les autres.

**7.** Utilisation des polyuréthanes thermoplastiques selon l'une quelconque des revendications 1 à 6 pour la préparation de corps façonnés par un procédé de moulage par injection, d'extrusion ou de frittage ou pour le revêtement de corps façonnés.

**8.** Utilisation selon la revendication 7, **caractérisée en ce que** les corps façonnés sont employés pour des utilisations dans le domaine automobile, de construction de machines, des meubles, du sport et des loisirs.

9. Corps façonnés, contenant un polyuréthane thermoplastique, tel qu'il est défini dans l'une quelconque des revendications 1 à 6.

10. Utilisation d'un mélange d'alcanediols, contenant 60 à 85% en mole de 1,6-hexanediol comme agent d'allongement de chaîne principal C1 et 15 à 40% en mole de 1,3-propanediol comme co-agent d'allongement de chaîne C2, comme agent d'allongement de chaîne lors de la préparation de polyuréthanes thermoplastiques pour empêcher la formation d'un recouvrement sur des corps façonnés préparés à partir des polyuréthanes thermoplastiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1010712 A
- EP 1153951 A
- EP 1043349 A
- DE 102006021734 A
- DE 2901774 A

**In der Beschreibung aufgeführte Nicht-Patentliteratur**

- Polyurethane. Taschenbuch der Kunststoff-Additive. Hanser Verlag, 1989
- High Polymers. **J. H. SAUNDERS ; K. C. FRISCH.** Polyurethane. Interscience Publishers, 1962, vol. XVI, 1, 2
- Taschenbuch der Kunststoff-Additive. Hanser Verlag, 1989